# EUROPEAN PATENT SPECIFICATION

(11) **EP 3 944 050 B1**
(45) Date of publication and mention of the grant of the patent: **01.05.2024**
(21) Application number: 20815494.8
(22) Date of filing: 05.03.2020
(51) Int. Cl.: G05D 1/02, G08G 1/00

(54) **DELIVERY ROBOT CONTROL METHOD, DEVICE, APPARATUS, SYSTEM, AND STORAGE MEDIUM**
VERFAHREN ZUR STEUERUNG EINES LIEFERROBOTERS, VORRICHTUNG, GERÄT, SYSTEM UND SPEICHERMEDIUM
PROCÉDÉ, DISPOSITIF, APPAREIL, SYSTÈME DE COMMANDE DE ROBOT DE LIVRAISON, ET SUPPORT D'ENREGISTREMENT

(30) Priority: 29.05.2019 CN 201910458190
(43) Date of publication of application: 26.01.2022
(73) Proprietor: Beijing Jingdong Qianshi Technology Co., Ltd., Beijing 100176 (CN)
(72) Inventor: CHEN, Qingshan, Beijing 100176 (CN)
(74) Representative: Slingsby Partners LLP
(86) International application number: PCT/CN2020/078055
(87) International publication number: WO 2020/238315

(56) References cited:
- US-A1- 2014 350 831
- US-A1- 2018 321 675
- US-A1- 2019 025 819

## Description

This application claims a priority to the Chinese Patent Application No. 201910458190.4, filed to the China National Intellectual Property Administration on May 29, 2019 and entitled "METHOD, APPARATUS, DEVICE, SYSTEM FOR CONTROLLING DISTRIBUTION ROBOT AND STORAGE MEDIUM'.

### TECHNICAL FIELD

The present application relates to the field of logistics technology, in particular to a method, an apparatus, a device, a system for controlling a distribution robot and a storage medium.

### BACKGROUND

With the rapid development of e-commerce, the increasing demand for logistics service has promoted the rapid development of logistics service. Intelligent distribution robots are gradually added to the logistics service to complete distributing express items from a stopping point to a distribution point.

In actual situations, there are usually many express items that need to be distributed at a certain intermediate transit point, but due to a limited loading capacity of a distribution robot, one distribution robot cannot complete distribution all at once, and then multiple distributions are required. In the prior art, in order to reduce a distribution time, multiple distribution robots are usually used for time-sharing distribution, which requires manual control of a departure time interval between each distribution robot. However, manual controlling a time interval is not accurate enough. If the time interval is too short, it is easy to occur a situation of mutual interference and influence of the distribution robots, and if the time interval is too long, it will result in longer distribution time.

Therefore, how to effectively control the distribution robots and reduce the distribution time has become an urgent technical problem to be solved.

Related technologies are known from documents US 2018/321675 A1, which discloses systems and methods related to roadmaps for mobile robotic devices.

### SUMMARY

The invention is set out in the appended set of claims. The present application provides a method, an apparatus, a device, and a system for controlling a distribution robot and a storage medium, so as to solve defects in the prior art that the manual control of the departure time interval is not accurate enough.

A first aspect of the present application provides a method for controlling a distribution robot, including:
acquiring, by a first distribution robot in a first group, its own position information and position information of a second distribution robot, where the second distribution robot is a distribution robot closest to the first distribution robot that departs before the first distribution robot departs; and
controlling, by the first distribution robot, its own driving state according to its own position information, the position information of the second distribution robot, and a preset driving route, so that the first distribution robot drives at a fastest speed in a case that a distance to the second distribution robot is not less than a preset safe distance.

In an implementation, the method further includes:
determining, by the first distribution robot, a driving distance of the second distribution robot according to the position information of the second distribution robot after the second distribution robot departs; and
departing, by the first distribution robot, when the driving distance of the second distribution robot reaches the preset safe distance.

In embodiments of the present application, at the time of departure, the first distribution
robot will only depart after the second distribution robot departs and drives for the preset safe distance, so as to avoid mutual influence between distribution robots at the time of departure.

In an implementation, before distribution robots of the first group depart, the method further includes:
sending, by the first distribution robot, a group joining request to a server, where the group joining request includes identification information of the first group, so that the server adds the first distribution robot to the first group; where the identification information of the first group is identification information of a message channel of the first group created by the server; and
receiving, by the first distribution robot, the preset driving route of the first group returned by the server.

In the embodiments of the present application, message sharing of each distribution robot and the server is realized through the message channel of the first group created by the server, so that the distribution robots can collaborate in distribution.

In an implementation, the method further includes:
reporting, by the first distribution robot, the position information of the first distribution robot through the message channel of the first group according to a preset time period.

In an implementation, if the first distribution robot stops driving during driving, the first distribution robot reports a stop driving message through the message channel of the first group, so that each third distribution robot departing after the first distribution robot controls a driving state and the preset safe distance between two adjacent distribution robots is maintained; and
each distribution robot departing before the first distribution robot drives normally.

In an implementation, after the first distribution robot reports the stop driving message through the message channel of the first group, the method further includes:
receiving, by the first distribution robot, identification information of a second group created by the server, where the second group includes the first distribution robot and each third distribution robot; where the identification information of the second group is identification information of a message channel of the second group created by the server.

In an implementation, when it is determined that driving is continued, the first distribution robot starts to drive, and reports driving information through the message channel of the second group, so that each third distribution robot starts to drive sequentially.

In the embodiments of the present application, when the first distribution robot stops driving halfway, the first group may be split into two groups, which does not affect driving of a distribution robot in front of the first distribution robot, and simultaneously ensures that a distribution robot behind the first distribution robot may stop in time.

In an implementation, the first distribution robot completes stopping according to a preset stopping area of a target distribution point and position information of other distribution robots when the first distribution robot determines that it has reached the target distribution point; and
the first distribution robot reports a stopping completion message through the message channel of the first group.

In an implementation, after each distribution robot in the first group completes a distribution task, the first distribution robot controls itself to return according to an order of each distribution robot in the first group, and maintains that the distance to the second distribution robot is not less than the preset safe distance.

In an implementation, when the first distribution robot arrives at an intermediate transit point of departure, the first distribution robot reports a message that it has returned through the message channel of the first group, so that the server breaks up the first group when all distribution robots of the first group return to the intermediate transit point.

A second aspect of the present application provides an apparatus for controlling a distribution robot, including:
an acquiring module, configured for a first distribution robot in a first group to acquire its own position information and position information of a second distribution robot, where the second distribution robot is a distribution robot closest to the first distribution robot that departs before the first distribution robot departs; and
a controlling module, configured for the first distribution robot to control its own driving state according to its own position information, the position information of the second distribution robot, and a preset driving route, so that the first distribution robot drives at a fastest speed in a case that a distance to the second distribution robot is not less than a preset safe distance.

In an implementation, the controlling module is further configured for the first distribution robot to:
determine a driving distance of the second distribution robot according to the position information of the second distribution robot after the second distribution robot departs; and
depart when the driving distance of the second distribution robot reaches the preset safe distance.

In an implementation, the acquiring module is further configured for the first distribution robot to:
send a group joining request to a server, where the group joining request includes identification information of the first group, so that the server adds the first distribution robot to the first group; where the identification information of the first group is identification information of a message channel of the first group created by the server; and
receive the preset driving route of the first group returned by the server.

In an implementation, the controlling module is further configured for the first distribution robot to: report the position information of the first distribution robot through the message channel of the first group according to a preset time period.

In an implementation, the controlling module is further configured for the first distribution robot to:
if the first distribution robot stops driving during driving, report a stop driving message through the message channel of the first group, so that each third distribution robot departing after the first distribution robot controls a driving state and the preset safe distance between two adjacent distribution robots is maintained; and each distribution robot departing before the first distribution robot drives normally.

In an implementation, the acquiring module is further configured for the first distribution robot to receive identification information of a second group created by the server, where the second group includes the first distribution robot and each third distribution robot; where the identification information of the second group is identification information of a message channel of the second group created by the server.

In an implementation, the controlling module is further configured for the first distribution robot to:
when it is determined that driving is continued, start to drive, and report driving information through the message channel of the second group, so that each third distribution robot starts to drive sequentially.

In an implementation, the controlling module is further configured for the first distribution robot to:
complete stopping according to a preset stopping area of a target distribution point and position information of other distribution robots when the first distribution robot determines that it has reached the target distribution point; and
report a stopping completion message through the message channel of the first group.

In an implementation, the controlling module is further configured for the first distribution robot to:
after each distribution robot in the first group completes a distribution task, control itself to return according to an order of each distribution robot in the first group, and maintain that the distance to the second distribution robot is not less than the preset safe distance.

In an implementation, the controlling module is further configured for the first distribution robot to:
when the first distribution robot arrives at an intermediate transit point of departure, report a message that it has returned through the message channel of the first group, so that the server breaks up the first group when all distribution robots of the first group return to the intermediate transit point.

A third aspect of the present application provides a computer device, including: at least one processor and a memory; where
the memory stores a computer program; the at least one processor executes the computer program stored in the memory to implement the method provided in the first aspect.

A fourth aspect of the present application provides a system for controlling a distribution robot, including: a server and at least two distribution robots; where
the server is configured to create a group and a message channel of the group;
a first distribution robot that does not first depart in the group is configured to execute the method provided in the first aspect;
a distribution robot that first departs in the group is configured to send a departure request to the server, where the departure request includes a starting intermediate transit point and a target distribution point; and
the server is further configured to determine a driving route according to the departure request, and return the departure request to the distribution robot that first departs.

A fifth aspect of the present application provides a computer-readable storage medium, where the computer-readable storage medium stores a computer program, and the computer program, when executed, implements the method provided in the first aspect.

In the method, apparatus, device, system for controlling the distribution robot and the storage medium provided in the present application, the first distribution robot may acquire its own position information and the position information of the second distribution robot that departs before it departs, and calculate the distance to the second distribution robot according to its own position and the position information of the second distribution robot, and drive at the fastest speed in a case of ensuring that the distance to the second distribution robot is not less than the preset safe distance, to avoid a situation that two adjacent robots are unable to drive caused by mutual influence due to that the distance between them is too close. On the basis of ensuring the preset safe distance, the driving state of the first distribution robot is controlled to make it to drive at the fastest speed it can drive, which effectively reduces an overall distribution time, and solves the problem in the prior art caused by manual control of the departure time interval being not accurate enough.

### BRIEF DESCRIPTION OF DRAWINGS

In order to more clearly illustrate the technical solutions in the embodiments of the present application or in the prior art, the drawings needed to be used in the description of the embodiments or the prior art will be briefly described below. Obviously, the drawings in the following description are some embodiments of the present application, for those of ordinary skilled in the art, other drawings can be obtained according to these drawings without any creative efforts.
FIG. 1 is a schematic flowchart of a method for controlling a distribution robot according to an embodiment of the present application;
FIG. 2 is a schematic flowchart of a method for controlling a distribution robot provided by another embodiment of the present application;
FIG. 3 is a schematic structural diagram of an apparatus for controlling a distribution robot provided by an embodiment of the present application;
FIG. 4 is a schematic structural diagram of a computer device provided by an embodiment of the present application; and
FIG. 5 is a schematic structural diagram of a system for controlling a distribution robot provided by an embodiment of the present application.

Through the above drawings, specific embodiments of the present application have been shown, which will be described in more detail later. These drawings and text descriptions are not intended to limit the scope of the concept of the present application in any way, but to explain the concept of the present application for those skilled in the art by referring to particular embodiments.

### DESCRIPTION OF EMBODIMENTS

In order to make the objects, technical solutions and advantages of the embodiments of the present application more clear, the technical solutions in the embodiments of the present application will be clearly and completely described in combination with the drawings in the embodiments of the present application. Obviously, the described embodiments are part of the embodiments of the present application, but not all of the embodiments. Based on the embodiments of the present application, all other embodiments obtained by those of ordinary skill in the art without creative efforts are within the protection scope of the present application.

First, terms involved in the present application are explained.

Distribution point: a distribution robot has several stations that need to be reached during a distribution process (similar to a relationship between a bus and a bus station), these stations are defined as distribution points, where pick-up persons may pick up their own express parcels at the distribution points.

Intermediate transit point: refers to a stop station at an upper level of a distribution point, such as a transfer station in a certain community, where an express vehicle stops at the intermediate transit point, and cargoes are distributed to distribution points of different communities through intelligent robots from the intermediate transit point.

Message channel: a message pipeline, any member in pipeline members sends a message, and the pipeline members will receive the message (including the member who sent the message).
groupID: a code that identifies a group, which may be expressed in digital form, or in other symbols or forms.

The method for controlling the distribution robot provided in the embodiments of the present application is suitable for a scenario where distribution is performed through a distribution robot. For example, a certain intermediate transit point has many express items that need to be distributed to a certain distribution point, and one distribution robot cannot complete distributing at one time, and multiple distribution robots are required for distribution. Groups may be created through a server, multiple distribution robots that distribute to the distribution point are added into one group, then a message channel of the group is created, and message sharing within the group is realized. Each distribution robot and the server perform message interaction through the message channel to achieve collaborative distribution, and it may also be that each distribution robot communicates with each other to achieve collaborative distribution, which may be set according to actual needs. The distribution robot here is an intelligent distribution robot, which may be provided with a camera and other related sensors for sensing a surrounding environment, identifying obstacles through image processing, and the like, and performing obstacles avoidance, and the like. When distribution is needed, an operator may operate a first distribution robot (i.e. a distribution robot that needs to first depart) to send a group creation request to the server. After receiving the group creation request, the server creates a message channel of one group (called a first group), sets identification information of the first group, such as group ID (groupID), and returns the identification information of the first group to the first distribution robot. It may also be that the first distribution robot sets identification information of members in the group, such as serial numbers (which may be incremented from 1), and returns a serial number of the first distribution robot to the first distribution robot. The operator may input a target distribution point to be reached to the first distribution robot, the first distribution robot may send a navigation service request containing the target distribution point to the server, then the server may acquire the target distribution point and a departure point (i.e. a starting intermediate transit point), plan an optimal driving route according to the starting point and the target distribution point in combination with a navigation map, and return it to the first distribution robot. The operator may continue to operate a second distribution robot, input the identification information of the first group acquired by the first distribution robot and group member identification information of the second distribution robot, and the second distribution robot will file an application to the server for joining the first group. After receiving a joining request, the server adds the second distribution robot to the first group, and returns a driving route corresponding to the first group; and so on, all n required distribution robots are added to the first group. After adding in the first group, they may depart in order. The first distribution robot in the first group (any distribution robot that does not first departs in the first group) may acquire its own position information and position information of the second distribution robot that departs before it departs, the first distribution robot may calculate a distance to the second distribution robot according to its own position information and position information of the second distribution robot, and drive at a fastest speed in a case of ensuring that the distance to the second distribution robot is not less than a preset safe distance. The preset safe distance may be set according to an obstacle avoidance distance of distribution robots, so as to avoid a situation that two adjacent robots are unable to drive caused by mutual influence due to that the distance between them is too close. On the basis of ensuring the preset safe distance, a driving state of the first distribution robot is controlled to make it to drive at the fastest speed it can drive, which effectively reduces an overall distribution time. An optimal state is to drive by maintaining a preset safe distance to the second distribution robot. The problem in the prior art caused by manual control of a departure time interval being not accurate enough is solved.

In addition, terms "first", "second", and the like are only used for descriptive purposes, and cannot be understood as indicating or implying relative importance or implicitly indicating the number of indicated technical features. In the description of the following embodiments, "multiple" means more than two, unless otherwise specifically defined.

The following several specific embodiments may be combined with each other, and the same or similar concepts or processes may not be repeated in some embodiments. The embodiments of the present application will be described below in conjunction with the accompanying drawings.

### Embodiment 1

This embodiment provides a method for controlling a distribution robot, which is used to control the distribution robot to perform distribution of express items. An execution subject of this embodiment is an apparatus for controlling the distribution robot, and the apparatus may be provided in the distribution robot. The distribution robot is an intelligent distribution robot, which may also be called an unmanned vehicle or an autonomous vehicle.

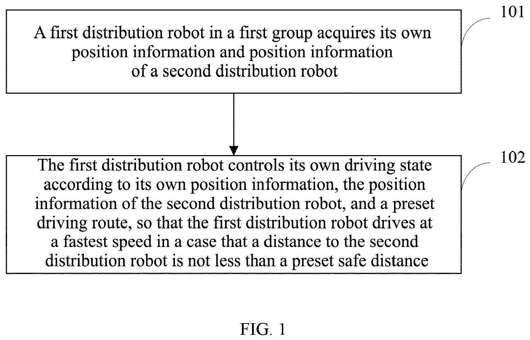

As shown in FIG. 1, it is a schematic flowchart of the method for controlling the distribution robot provided by this embodiment. The method for controlling the distribution robot includes:
step 101: a first distribution robot in a first group acquires its own position information and position information of a second distribution robot.

The second distribution robot is a distribution robot closest to the first distribution robot that departs before the first distribution robot departs, and the first group includes at least two distribution robots.

Specifically, a group may be created through a server, and multiple distribution robots distributed to a distribution point are added to one group, and a message channel of the group is created to realize message sharing within the group. Each distribution robot and the server may perform message interaction through the message channel to achieve collaborative distribution, or it may also be that the distribution robots communicate with each other to achieve collaborative distribution, which may be set according to actual needs.

The distribution robot here is an intelligent distribution robot, which may be provided with a camera and other related sensors for sensing a surrounding environment, identifying obstacles through image processing, and the like, and performing obstacles avoidance, and the like.

In an implementation, when distribution is needed, an operator may operate a first distribution robot (i.e. a distribution robot that needs to first depart) to send a group creation request to the server. After receiving the group creation request, the server creates a message channel of one group (called a first group), sets identification information of the first group, and returns the identification information of the first group to the first distribution robot. It may also be that the first distribution robot sets identification information of members in the group, such as serial numbers (which may be incremented from 1), and returns a serial number of the first distribution robot to the first distribution robot. The operator may input a target distribution point to be reached to the first distribution robot, the first distribution robot may send a navigation service request containing the target distribution point to the server, then the server may acquire the target distribution point and a departure point (i.e. a starting intermediate transit point), plan an optimal driving route according to the starting point and the target distribution point in combination with a navigation map, and return it to the first distribution robot. The operator may continue to operate a second distribution robot, input the identification information of the first group acquired by the first distribution robot and group member identification information of the second distribution robot, and the second distribution robot will file an application to the server for joining the first group. After receiving a joining request, the server adds the second distribution robot to the first group, and returns a driving route corresponding to the first group; and so on, all n required distribution robots are added to the first group. After adding in the first group, they may depart in order.

In an implementation, it may be that the first distribution robot sends a departure request to the server, the server instructs to depart, then the first distribution robot departs. After the first distribution robot departs, position information will be reported in real time or periodically, and the server calculates a driving distance thereof according to the position information of the first distribution robot. After the driving distance of the first distribution robot reaches a preset safe distance, it sends a departure instruction to the second distribution robot, and the second distribution robot departs, and so on, after a previous distribution robot departs and drives for the preset safe distance, a latter distribution robot departs.

In an implementation, it may also be that the operator triggers the first distribution robot to depart after confirming that departure can be performed, and the second distribution robot acquires the position information of the first distribution robot by itself, and automatically departs after determining that the first distribution robot has departed and driven the preset safe distance.

In an implementation, identification information of each member in the first group may be preset for each distribution robot. During interactive communication, for example, when position information of each distribution robot is reported through the message channel of the first group, identification information thereof is carried, so that other distribution robots may be able to know a position and other conditions of each member in the group.

For the first distribution robot in the first group (that is, any distribution robot that does not first depart in the first group), the first distribution robot may acquire its own position information and the position information of the second distribution robot that departs before it.

The second distribution robot is not the last distribution robot to depart in the first group.

Step 102: the first distribution robot controls its own driving state according to its own position information, the position information of the second distribution robot, and a preset driving route, so that the first distribution robot drives at a fastest speed in a case that a distance to the second distribution robot is not less than a preset safe distance.

Specifically, after acquiring its own position information and the position information of the second distribution robot that departs before it departs, the first distribution robot may calculate a distance to the second distribution robot according to its own position information and the position information of the second distribution robot, and control the driving state of the first distribution robot in a case of ensuring that the distance to the second distribution robot is not less than the preset safe distance, so that the first distribution robot drives at the fastest speed it can drive. The preset safe distance may be set according to an obstacle avoidance distance of the distribution robot, so as to avoid a situation that two adjacent robots are unable to drive caused by mutual influence due to that the distance between them is too close. The preset safe distance may be, for example, 5 meters, 8 meters, and the like, which may be specifically set according to actual conditions. On the basis of ensuring the preset safe distance, the driving state of the first distribution robot is controlled to make it to drive at the fastest speed it can drive, which effectively reduces an overall distribution time. An optimal state is to drive by maintaining the preset safe distance to the second distribution robot. The problem in the prior art caused by manual control of a departure time interval being not accurate enough is solved.

According to the method for controlling the distribution robot provided in this embodiment, the first distribution robot may acquire its own position information and the position information of the second distribution robot that departs before it departs, and calculate the distance to the second distribution robot according to its own position and the position information of the second distribution robot, and drive at the fastest speed in a case of ensuring that the distance to the second distribution robot is not less than the preset safe distance, to avoid a situation that two adjacent robots are unable to drive caused by mutual influence due to that the distance between them is too close. On the basis of ensuring the preset safe distance, the driving state of the first distribution robot is controlled to make it to drive at the fastest speed it can drive, which effectively reduces an overall distribution time, and solves the problem in the prior art caused by manual control of the departure time interval being not accurate enough.

### Embodiment 2

This embodiment performs further supplement and illustration for the method provided in the Embodiment 1.

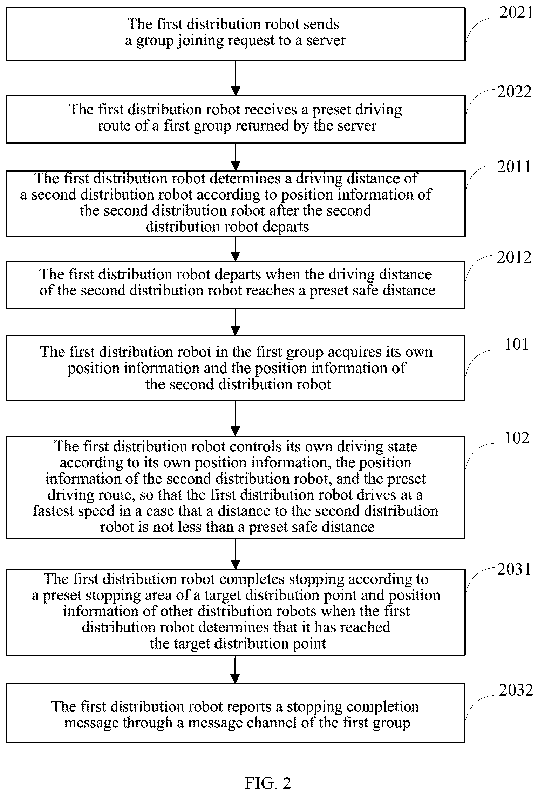

As shown in FIG. 2, it is a schematic flowchart of a method for controlling a distribution robot provided by this embodiment.

As an implementable manner, on the basis of the foregoing Embodiment 1, the method may further include:
step 2011, the first distribution robot determines a driving distance of the second distribution robot according to the position information of the second distribution robot after the second distribution robot departs;
step 2012, the first distribution robot departs when the driving distance of the second distribution robot reaches the preset safe distance.

Specifically, for any distribution robot in the first group, after a previous distribution robot departs and drives for the preset safe distance, a latter distribution robot departs, so as to avoid mutual influence which causes that it impossible to drive.

In an implementation, it may be that the first distribution robot acquires the position information of the second distribution robot in real time or periodically, and calculates its driving distance according to the position information of the second distribution robot, and determines whether its driving distance has reached the preset safe distance. After determining that the preset safe distance has been reached, the first distribution robot will automatically depart according to the preset driving route.

In an implementation, it may also be that after the second distribution robot departs, the second distribution robot reports the position information in real time or periodically, the server calculates the driving distance of the second distribution robot, determines that the second distribution robot reaches the preset safe distance, and send a departure instruction to the first distribution robot, and the first distribution robot will depart after receiving the departure instruction.

The preset driving route is planned by the server, and after the distribution robot joins the group, the server sends it to each distribution robot. In an implementation, multiple distribution robots with the same target distribution point may be set to be in the same group, that is, the multiple distribution robots in the first group all arrive at the same target distribution point and have the same driving route.

In an implementation, when planning a driving route, it may be stipulated that the distribution robot should drive on, for example, a bicycle lane. Since the size of the distribution robot is relatively large, it is considered that two distribution robots cannot overtake on the same route. In order to avoid becoming obstacles to each other, the preset safe distance is set to ensure that driving will not be affected between each other.

Each distribution robot may normally perform obstacle avoidance to other obstacles. For example, if an obstacle is small, and it is considered that it may be bypassed through an obstacle avoidance decision, and the distribution robot will bypass and continue to drive. If the obstacle is large, and it may not be bypassed, then an obstacle avoidance measure such as stopping and waiting or decelerating is taken. The obstacle avoidance measure for the distribution robot is the prior art and will not be repeated here.

As another implementable manner, on the basis of the foregoing Embodiment 1, before distribution robots of the first group depart, the method further includes:
step 2021, the first distribution robot sends a group joining request to the server.

The group joining request includes the identification information of the first group, so that the server adds the first distribution robot to the first group; where the identification information of the first group is identification information of the message channel of the first group created by the server.

Step 2022, the first distribution robot receives the preset driving route of the first group returned by the server.

The specific group creation process has been described in detail above, and will not be repeated here.

As another implementable manner, on the basis of the foregoing Embodiment 1, the method further includes:
the first distribution robot reports the position information of the first distribution robot through the message channel of the first group according to a preset time period.

Specifically, the first distribution robot reports its own position information through the message channel of the first group during a driving process according to the preset time period, so that the server and other distribution robots may know its own position information of the first distribution robot, for example, a latter distribution robot departing after the first distribution robot needs to maintain the preset safe distance with the first distribution robot according to the position information of the first distribution robot.

The preset time period may be set according to actual needs, for example, it may be set to 0.5 seconds, 1 second, 2 seconds, and the like, and which are not specifically limited.

As another implementable manner, on the basis of the foregoing Embodiment 1, if the first distribution robot stops driving during driving, the first distribution robot reports a stop driving message through the message channel of the first group, so that each third distribution robot departing after the first distribution robot controls a driving state and the preset safe distance between two adjacent distribution robots is maintained; and each distribution robot departing before the first distribution robot drives normally.

Specifically, if the first distribution robot encounters situations that need to stop driving, for example, encounters an obstacle that cannot be bypassed or encounters a red light and the like, during driving, the first distribution robot is controlled to stop driving, and the stop driving message is reported through the message channel of the first group. Each distribution robot that ranks in front of the first distribution robot (including a distribution robot that first departs) may continue to drive without being affected. Each distribution robot that ranks behind the first distribution robot may not bypass and needs to ensure the preset safe distance, therefore, it is necessary to control the driving state and stop driving at or beyond the preset safe distance.

In an implementation, after the first distribution robot reports the stop driving message through the message channel of the first group, the method further includes:
the first distribution robot receives identification information of a second group created by the server, where the second group includes the first distribution robot and each third distribution robot; where the identification information of the second group is identification information of a message channel of the second group created by the server.

Specifically, after the first distribution robot stops driving, the server may split the first group into two groups. For example, it may be considered that those distribution robots before the first distribution robot are still the first group, and the first distribution robot and each third distribution robot behind thereof are added into a new group (called the second group), the message channel for the second group is created, and the identification information of the second group is sent to the first distribution robot and each third distribution robot.

In an implementation, after the first distribution robot determines that it can continue to drive, the first distribution robot controls itself to start driving, and reports a driving message through the message channel of the second group, so that each third distribution robot starts to drive sequentially.

Specifically, after the first distribution robot can continue to drive, it can start to drive, and report the driving message through the message channel of the second group, so that each third distribution robot in the second group can start to drive.

During the entire driving process, each distribution robot will report its own position information in real time or periodically, and may report a stop driving message when it stops, and report a driving message after starting to drive, and the like.

As another implementable manner, on the basis of the foregoing Embodiment 1, the method may further include that:
step 2031: the first distribution robot completes stopping according to a preset stopping area of a target distribution point and position information of other distribution robots when the first distribution robot determines that it has reached the target distribution point; and
step 2032: the first distribution robot reports a stopping completion message through the message channel of the first group.

Specifically, after the first distribution robot in the first group arrives at the target distribution point, it will send an arrival message to the message channel of the first group. After other distribution robots in the first group receive the message, they may successively stop in the stopping area of the target distribution point according to an order of the group. Each distribution robot will report a stopping completion message after completing stopping, and the server may notify a next distribution robot to stop, or the next distribution robot will automatically stop after it acquires the stopping completion message of a previous distribution robot thereof.

Exemplarily, an order serial number of each distribution robot in the group may be preset, and each distribution robot determines its own stopping position according to the order serial number, stopping positions of other distribution robots, and the preset stopping area. For example, the stopping area of the target distribution point is divided into 9 stop stations, and there are 8 distribution robots in the first group, each distribution robot may stop at one of the stop stations according to its own serial number. In an implementation, serial numbers of the 9 stop stations may be set, then when each distribution robot stops, it will stop according to the order of the stop stations. For example, the first distribution robot stops at No. 1 stop station, the second stops at No. 2, and the like. Specifically, it may be set according to actual needs, which is not limited in this embodiment.

After completing stopping, each distribution robot may automatically send pickup information to a consignee of each express item. The pickup information may include information that may be identified by a user such as the serial number of the distribution robot, and the like. The pickup information may also include verification information such as a pickup password, a two dimensional code, a barcode, and the like. The consignee may pick up the express item from a corresponding distribution robot at the target distribution point according to the received verification information. The specific pickup process of the user is based on the prior art, and will not be repeated here.

In this embodiment, each distribution point may be provided with multiple stop stations, and there is enough space to accommodate the multiple distribution robots.

As another implementable manner, on the basis of the foregoing Embodiment 1, after each distribution robot in the first group completes a distribution tasks, the first distribution robot controls itself to return according to an order of each distribution robot in the first group, and maintains that the distance to the second distribution robot is not less than the preset safe distance.

Specifically, when all distribution robots in the first group complete their distribution tasks, that is, all express items have been picked up by consignees, each distribution robot may return according to the order thereof in the first group. The specific operations of the returning process and the distribution process are similar, which will not be repeated here.

In an implementation, when the first distribution robot arrives at an intermediate transit point of departure, the first distribution robot reports a message that it has returned through the message channel of the first group, so that the server breaks up the first group when all distribution robots of the first group return to the intermediate transit point.

Specifically, when the first intelligent distribution robot in the first group arrives at a destination (an intermediate transit point), it will send a message of arriving at the destination to the message channel of the first group. After other distribution robots in the first group receive the message, they will stop in a destination stopping area sequentially according to the order thereof in the group. After completing stopping, a stopping completion message will be sent to notify a next distribution robot to stop. After all distribution robots in the first group complete stopping at the destination, the server will delete information of the first group and break up the members of the first group.

It should be noted that each implementable manner in this embodiment may be implemented separately, or may be implemented in any combination without conflict, which is not limited in the present application.

According to the method for controlling the distribution robot provided in this embodiment, the first distribution robot may acquire its own position information and the position information of the second distribution robot that departs before it departs, and calculate the distance to the second distribution robot according to its own position and the position information of the second distribution robot, and drive at the fastest speed in a case of ensuring that the distance to the second distribution robot is not less than the preset safe distance, to avoid a situation that two adjacent robots are unable to drive caused by mutual influence due to that the distance between them is too close. On the basis of ensuring the preset safe distance, the driving state of the first distribution robot is controlled to make it to drive at the fastest speed it can drive, which effectively reduces an overall distribution time. An optimal state is to drive by maintaining a preset safe distance to the second distribution robot. The problem in the prior art caused by manual control of the departure time interval being not accurate enough is solved. In addition, at the time of departure, the first distribution robot will only depart after the second distribution robot departs and drives for the preset safe distance, so as to avoid mutual influence between distribution robots at the time of departure. Message sharing of each distribution robot and the server is realized through the message channel of the first group created by the server, so that the distribution robots can collaborate in distribution. In addition, when the first distribution robot stops driving halfway, the first group may be split into two groups, which does not affect driving of a distribution robot in front of the first distribution robot, and simultaneously ensures that a distribution robot behind the first distribution robot may stop in time.

### Embodiment 3

This embodiment provides an apparatus for controlling a distribution robot, which is used to execute the method of the above first embodiment.

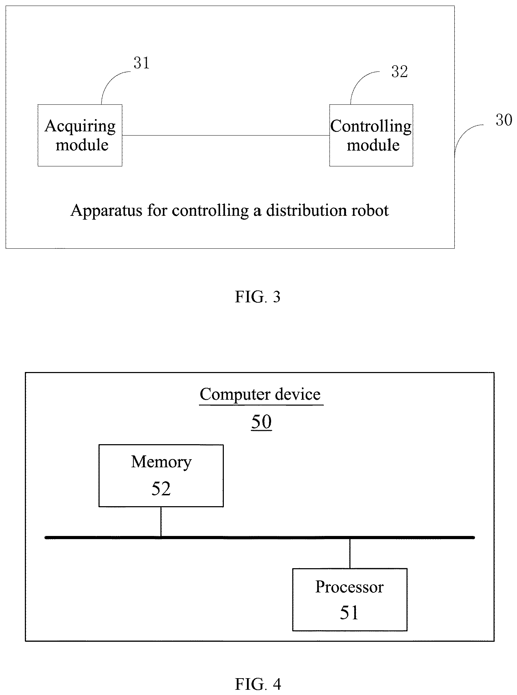

As shown in FIG. 3, it is a schematic structural diagram of an apparatus for controlling a distribution robot provided by this embodiment. The apparatus 30 for controlling the distribution robot includes an acquiring module 31 and a controlling module 32.

The acquiring module is configured for a first distribution robot in a first group to acquire, its own position information and position information of a second distribution robot, where the second distribution robot is a distribution robot closest to the first distribution robot that departs before the first distribution robot departs; and the controlling module is configured for a first distribution robot in a first group to control its own driving state according to its own position information, the position information of the second distribution robot, and a preset driving route, so that the first distribution robot drives at a fastest speed in a case that a distance to the second distribution robot is not less than a preset safe distance.

Regarding the apparatus in this embodiment, a specific manner in which each module performs operations has been described in detail in the embodiment related to the method, and will not be elaborated in detail here.

According to the apparatus for controlling the distribution robot provided in this embodiment, the first distribution robot may acquire its own position information and the position information of the second distribution robot that departs before it departs, and calculate the distance to the second distribution robot according to its own position and the position information of the second distribution robot, and drive at the fastest speed in a case of ensuring that the distance to the second distribution robot is not less than the preset safe distance, to avoid a situation that two adjacent robots are unable to drive caused by mutual influence due to that the distance between them is too close. On the basis of ensuring the preset safe distance, the driving state of the first distribution robot is controlled to make it to drive at the fastest speed it can drive, which effectively reduces an overall distribution time. An optimal state is to drive by maintaining a preset safe distance to the second distribution robot. The problem in the prior art caused by manual control of the departure time interval being not accurate enough is solved. In addition, at the time of departure, the first distribution robot will only depart after the second distribution robot departs and drives for the preset safe distance, so as to avoid mutual influence between distribution robots at the time of departure.

### Embodiment 4

This embodiment performs further supplement and illustration for the apparatus provided in the Embodiment 3, to implement the method provided in the Embodiment 2.

As an implementable manner, on the basis of the foregoing Embodiment 3, the controlling module is further configured for the first distribution robot to:
determine a driving distance of the second distribution robot according to the position information of the second distribution robot after the second distribution robot departs; and
depart when the driving distance of the second distribution robot reaches the preset safe distance.

As another implementable manner, on the basis of the foregoing Embodiment 3, the acquiring module is further configured for the first distribution robot to:
send a group joining request to a server, where the group joining request includes identification information of the first group, so that the server adds the first distribution robot to the first group; where the identification information of the first group is identification information of a message channel of the first group created by the server; and
receive the preset driving route of the first group returned by the server.

As another implementable manner, on the basis of the foregoing Embodiment 3, the controlling module is further configured for the first distribution robot to: report the position information of the first distribution robot through the message channel of the first group according to a preset time period.

As another implementable manner, on the basis of the foregoing Embodiment 3 above, the controlling module is further configured for the first distribution robot to:
if the first distribution robot stops driving during driving, report a stop driving message through the message channel of the first group, so that each third distribution robot departing after the first distribution robot controls a driving state and the preset safe distance between two adjacent distribution robots is maintained; and each distribution robot departing before the first distribution robot drives normally.

In an implementation, the acquiring module is further configured for the first distribution robot to receive identification information of a second group created by the server, where the second group includes the first distribution robot and each third distribution robot; where the identification information of the second group is identification information of a message channel of the second group created by the server.

In an implementation, the controlling module is further configured for the first distribution robot to:
when it is determined that driving is continued, start to drive, and report driving information through the message channel of the second group, so that each third distribution robot starts to drive sequentially.

As another implementable manner, on the basis of the foregoing Embodiment 3 above, the controlling module is further configured for the first distribution robot to:
complete stopping according to a preset stopping area of a target distribution point and position information of other distribution robots when the first distribution robot determines that it has reached the target distribution point; and
report a stopping completion message through the message channel of the first group.

As another implementable manner, on the basis of the foregoing Embodiment 3 above, the controlling module is further configured for the first distribution robot to:
after each distribution robot in the first group completes a distribution task, control itself to return according to an order of each distribution robot in the first group, and maintain that the distance to the second distribution robot is not less than the preset safe distance.

In an implementation, the controlling module is further configured for the first distribution robot to:
when the first distribution robot arrives at an intermediate transit point of departure, report a message that it has returned through the message channel of the first group, so that the server breaks up the first group when all distribution robots of the first group return to the intermediate transit point.

Regarding the apparatus in this embodiment, a specific manner in which each module performs operations has been described in detail in the embodiment related to the method, and will not be elaborated in detail here.

It should be noted that each implementable manner in this embodiment may be implemented separately, or may be implemented in any combination without conflict, which is not limited in the present application.

According to the apparatus for controlling the distribution robot of this embodiment, the first distribution robot may acquire its own position information and the position information of the second distribution robot that departs before it departs, and calculate the distance to the second distribution robot according to its own position and the position information of the second distribution robot, and drive at the fastest speed in a case of ensuring that the distance to the second distribution robot is not less than the preset safe distance, to avoid a situation that two adjacent robots are unable to drive caused by mutual influence due to that the distance between them is too close. On the basis of ensuring the preset safe distance, the driving state of the first distribution robot is controlled to make it to drive at the fastest speed it can drive, which effectively reduces an overall distribution time. An optimal state is to drive by maintaining a preset safe distance to the second distribution robot. The problem in the prior art caused by manual control of the departure time interval being not accurate enough is solved. In addition, at the time of departure, the first distribution robot will only depart after the second distribution robot departs and drives for the preset safe distance, so as to avoid mutual influence between distribution robots at the time of departure. Message sharing of each distribution robot and the server is realized through the message channel of the first group created by the server, so that the distribution robots can collaborate in distribution. In addition, when the first distribution robot stops driving halfway, the first group may be split into two groups, which does not affect driving of a distribution robot in front of the first distribution robot, and simultaneously ensures that a distribution robot behind the first distribution robot may stop in time.

### Embodiment 5

This embodiment provides a computer device for executing the method provided in the foregoing embodiments. The computer device may be a distribution robot or a device provided in the distribution robot.

As shown in FIG. 4, it is a schematic structural diagram of the computer device provided by this embodiment. The computer device 50 includes: at least one processor 51 and a memory 52;
the memory stores a computer program; the at least one processor executes the computer program stored in the memory to implement the method provided in the foregoing embodiments.

According to the computer device of this embodiment, the first distribution robot may acquire its own position information and the position information of the second distribution robot that departs before it departs, and calculate the distance to the second distribution robot according to its own position and the position information of the second distribution robot, and drive at the fastest speed in a case of ensuring that the distance to the second distribution robot is not less than the preset safe distance, to avoid a situation that two adjacent robots are unable to drive caused by mutual influence due to that the distance between them is too close. On the basis of ensuring the preset safe distance, the driving state of the first distribution robot is controlled to make it to drive at the fastest speed it can drive, which effectively reduces an overall distribution time. An optimal state is to drive by maintaining a preset safe distance to the second distribution robot. The problem in the prior art caused by manual control of the departure time interval being not accurate enough is solved. In addition, at the time of departure, the first distribution robot will only depart after the second distribution robot departs and drives for the preset safe distance, so as to avoid mutual influence between distribution robots at the time of departure. Message sharing of each distribution robot and the server is realized through the message channel of the first group created by the server, so that the distribution robots can collaborate in distribution. In addition, when the first distribution robot stops driving halfway, the first group may be split into two groups, which does not affect driving of a distribution robot in front of the first distribution robot, and simultaneously ensures that a distribution robot behind the first distribution robot may stop in time.

In some embodiments, a system for controlling a distribution robot is further provided, which is used to realize collaboration distribution of multiple distribution robots.

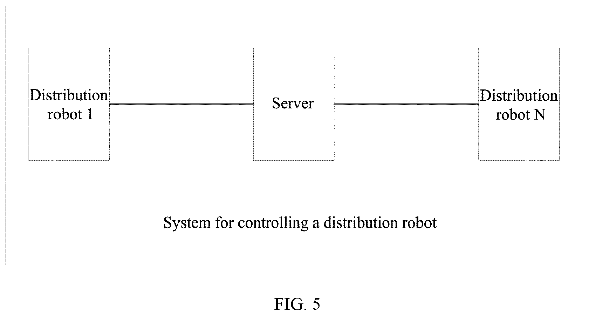

As shown in FIG. 5, it is a schematic structural diagram of the system for controlling the distribution robot provided by this embodiment. The system for controlling the distribution robot includes a server and at least two distribution robots.

The server is configured to create groups and message channels of the groups;
a first distribution robot that not first departs in the groups is configured to execute the method provided in the first aspect;
a distribution robot that first departs in the groups is configured to send a departure request to the server, where the departure request includes a starting intermediate transit point and a target distribution point; and
the server is further configured to determine a driving route according to the departure request, and return the departure request to the distribution robot that first departs.

### Embodiment 6

This embodiment provides a computer-readable storage medium, where the computer-readable storage medium stores a computer program, and when the computer program is executed, implements the method provided in any of the foregoing embodiments.

According to the computer-readable storage medium of this embodiment, the first distribution robot may acquire its own position information and the position information of the second distribution robot that departs before it departs, and calculate the distance to the second distribution robot according to its own position and the position information of the second distribution robot, and drive at the fastest speed in a case of ensuring that the distance to the second distribution robot is not less than the preset safe distance, to avoid a situation that two adjacent robots are unable to drive caused by mutual influence due to that the distance between them is too close. On the basis of ensuring the preset safe distance, the driving state of the first distribution robot is controlled to make it to drive at the fastest speed it can drive, which effectively reduces an overall distribution time. An optimal state is to drive by maintaining a preset safe distance to the second distribution robot. The problem in the prior art caused by manual control of the departure time interval being not accurate enough is solved. In addition, at the time of departure, the first distribution robot will only depart after the second distribution robot departs and drives for the preset safe distance, so as to avoid mutual influence between distribution robots at the time of departure. Message sharing of each distribution robot and the server is realized through the message channel of the first group created by the server, so that the distribution robots can collaborate in distribution. In addition, when the first distribution robot stops driving halfway, the first group may be split into two groups, which does not affect driving of a distribution robot in front of the first distribution robot, and simultaneously ensures that a distribution robot behind the first distribution robot may stop in time.

In the several embodiments provided in the present application, it should be understood that the disclosed apparatus and method may be implemented in other ways. For example, the apparatus embodiments described above are only illustrative. For example, the division of the unit is only a logical function division, and there may be other division ways in actual implementation, for example, multiple units or components may be combined or be integrated into another system, or some features may be ignored or not executed. In addition, coupling or direct coupling or communication connection shown or discussed herein may be an indirect coupling or communication connection through some interfaces, apparatuses or units, and may be electrical, mechanical or otherwise.

The units described as separate components may or may not be physically separated, and the components displayed as units may or may not be physical units, that is, they may be located in one place, or may be distributed onto multiple network units. Some or all of the units may be selected according to actual needs for the purpose of implementing the solution of the present embodiment.

In addition, each functional unit in each embodiment of the present application may be integrated into one processing unit, or each unit may physically exist separately, or two or more units may be integrated into one unit. The above-mentioned integrated unit may be implemented in the form of hardware, or may be implemented in the form of hardware plus software functional units.

The above-mentioned integrated unit implemented in the form of a software functional unit may be stored in a computer readable storage medium. The above-mentioned software functional unit is stored in a storage medium and includes several instructions for enabling a computer device (which may be a personal computer, a server, or a network device, or the like) or a processor to perform part steps of the above-mentioned methods in various embodiments of the present application. The foregoing storage medium includes various media that can store program code, such as a U disk, a mobile hard disk, a Read-Only Memory (ROM), a Random Access Memory (RAM), a magnetic disk, or an optical disk, or the like.

Those skilled in the art may clearly understand that, for the convenience and conciseness of the description, only the division of the above-mentioned each functional module is taken as an example. In practical applications, the above-mentioned functions may be allocated to different functional modules to accomplish as required, that is, an internal structure of the apparatus is divided into different functional modules to accomplish all or part of the functions described above. For the specific working process of the apparatus described above, reference may be made to the corresponding process in the foregoing method embodiments, which will not be repeated here.

Finally, it should be noted that the above embodiments are merely intended for describing, rather than limiting, the technical solutions of the present application; although the present application has been described in detail with reference to the foregoing embodiments, those skilled in the art will understand that they may still make modifications to the technical solutions described in the foregoing embodiments, or make equivalent substitutions to some or all of the technical features therein; and the modifications or substitutions do not make the essence of the corresponding technical solutions deviate from the scope of the technical solutions in the embodiments of the present application.

## Claims

1. A method for controlling a distribution robot, comprising
acquiring (101), by a first distribution robot in a first group, its own position information and position information of a second distribution robot, wherein the first group is a group which multiple distribution robots are added into and the first group is used for message sharing among the multiple distribution robots within the first group; wherein the multiple distribution robots comprise the first distribution robot and the second distribution robot, and the second distribution robot is a distribution robot closest to the first distribution robot that departs from a departure point before the first distribution robot departs from the departure point; and
controlling (102), by the first distribution robot, its own driving state according to its own position information, the position information of the second distribution robot, and a preset driving route, so that the first distribution robot drives at a fastest speed in a case that a distance to the second distribution robot is not less than a preset safe distance.

2. The method according to claim 1, further comprising:
determining (2011), by the first distribution robot, a driving distance of the second distribution robot according to the position information of the second distribution robot after the second distribution robot departs; and
departing (2012), by the first distribution robot, when the driving distance of the second distribution robot reaches the preset safe distance.

3. The method according to claim 1 or 2, wherein before distribution robots of the first group depart, the method further comprises:
before the first distribution robot is added to the first group, sending (2021), by the first distribution robot, a group joining request to a server, wherein the group joining request comprises identification information of the first group; wherein the identification information of the first group is identification information of a message channel of the first group created by the server; and
receiving (2022), by the first distribution robot, the preset driving route of the first group returned by the server.

4. The method according to any one of claims 1 to 3, further comprising:
reporting, by the first distribution robot, the position information of the first distribution robot through a message channel of the first group according to a preset time period.

5. The method according to any one of claims 1 to 4, wherein if the first distribution robot stops driving during driving, the first distribution robot reports a stop driving message through a message channel of the first group, so that each third distribution robot departing after the first distribution robot controls a driving state and the preset safe distance between two adjacent distribution robots is maintained; and
each distribution robot departing before the first distribution robot drives normally.

6. The method according to claim 5, wherein after the first distribution robot reports the stop driving message through a message channel of the first group, the method further comprises:
receiving, by the first distribution robot, identification information of a second group created by the server, wherein the second group comprises the first distribution robot and each third distribution robot; wherein the identification information of the second group is identification information of a message channel of the second group created by the server.

7. The method according to claim 6, wherein when it is determined that driving is continued, the first distribution robot starts to drive, and reports driving information through the message channel of the second group, so that each third distribution robot starts to drive sequentially.

8. The method according to any one of claims 1 to 5, wherein the first distribution robot completes (2031) stopping according to a preset stopping area of a target distribution point and position information of other distribution robots when the first distribution robot determines that it has reached the target distribution point; and
the first distribution robot reports (2032) a stopping completion message through the message channel of the first group.

9. The method according to any one of claims 1 to 5, wherein after each distribution robot in the first group completes a distribution task, the first distribution robot controls itself to return to the departure point according to an order of each distribution robot in the first group, and maintains that the distance to the second distribution robot is not less than the preset safe distance.

10. The method according to claim 9, wherein when the first distribution robot arrives at the departure point, the first distribution robot reports a message that it has returned through the message channel of the first group, so that the server breaks up the first group when all distribution robots of the first group return to the departure point.

11. An apparatus (30) for controlling a distribution robot, comprising an acquiring module (31), configured for a first distribution robot in a first group to acquire its own position information and position information of a second distribution robot, wherein the first group is a group which multiple distribution robots are added into and the first group is used for message sharing among the multiple distribution robots within the first group; wherein the multiple distribution robots comprise the first distribution robot and the second distribution robot, and the second distribution robot is a distribution robot closest to the first distribution robot that departs from a departure point before the first distribution robot departs from the departure point; and
a controlling module (32), configured for the first distribution robot to control its own driving state according to its own position information, the position information of the second distribution robot, and a preset driving route, so that the first distribution robot drives at a fastest speed in a case that a distance to the second distribution robot is not less than a preset safe distance.

12. A computer device (50), comprising: at least one processor (51) and a memory (52); wherein
the memory (52) stores a computer program; the at least one processor (51) executes the computer program stored in the memory (52) to implement the method according to any one of claims 1 to 10.

13. A system for controlling a distribution robot, comprising: a server and at least two distribution robots; wherein
the server is configured to create a group and a message channel of the group;
a first distribution robot that does not first depart in the group is configured to execute the method according to any one of claims 1 to 10;
a distribution robot that first departs in the group is configured to send a departure request to the server, wherein the departure request comprises a departure point and a target distribution point; and
the server is further configured to determine a driving route according to the departure request, and return the departure request to the distribution robot that first departs.

14. A computer-readable storage medium, **characterized in that** the computer-readable storage medium stores a computer program, and the computer program, when executed, implements the method according to any one of claims 1 to 10.

15. A computer program, **characterized by** comprising program codes, when a computer runs the computer program, the program codes execute the method according to any one of claims 1 to 10.

## Patentansprüche

1. Verfahren zum Steuern eines Verteilungsroboters, umfassend:
Erfassen (101), durch einen ersten Verteilungsroboter in einer ersten Gruppe, seiner eigenen Positionsinformationen und Positionsinformationen eines zweiten Verteilungsroboters, wobei die erste Gruppe eine Gruppe ist, zu der mehrere Verteilungsroboter hinzugefügt werden, und die erste Gruppe zum Nachrichtenaustausch unter den mehreren Verteilungsrobotern innerhalb der ersten Gruppe verwendet wird; wobei die mehreren Verteilungsroboter den ersten Verteilungsroboter und den zweiten Verteilungsroboter umfassen, und der zweite Verteilungsroboter ein sich am nächsten zu dem ersten Verteilungsroboter befindender Verteilungsroboter ist, der von einem Abfahrtspunkt abfährt, bevor der erste Verteilungsroboter von dem Abfahrtspunkt abfährt; und
Steuern (102), durch den ersten Verteilungsroboter, seines eigenen Fahrzustands gemäß seinen eigenen Positionsinformationen, den Positionsinformationen des zweiten Verteilungsroboters und einer voreingestellten Fahrroute, sodass der erste Verteilungsroboter in einem Fall, dass ein Abstand zu dem zweiten Verteilungsroboter nicht kleiner als ein voreingestellter Sicherheitsabstand ist, mit einer schnellsten Geschwindigkeit fährt.

2. Verfahren nach Anspruch 1, ferner umfassend:
Bestimmen (2011), durch den ersten Verteilungsroboter, einer Fahrdistanz des zweiten Verteilungsroboters gemäß den Positionsinformationen des zweiten Verteilungsroboters, nachdem der zweite Verteilungsroboter abgefahren ist; und
Abfahren (2012), durch den ersten Verteilungsroboter, wenn die Fahrdistanz des zweiten Verteilungsroboters den voreingestellten Sicherheitsabstand erreicht.

3. Verfahren nach Anspruch 1 oder 2, wobei das Verfahren vor dem Abfahren von Verteilungsrobotern der ersten Gruppe ferner umfasst:
bevor der erste Verteilungsroboter der ersten Gruppe hinzugefügt wird, Senden (2021), durch den ersten Verteilungsroboter, einer Gruppenbeitrittsanforderung an einen Server, wobei die Gruppenbeitrittsanforderung Identifikationsinformationen der ersten Gruppe umfasst; wobei die Identifikationsinformationen der ersten Gruppe Identifikationsinformationen eines Nachrichtenkanals der ersten Gruppe sind, die durch den Server erzeugt werden; und
Empfangen (2022), durch den ersten Verteilungsroboter, der voreingestellten Fahrroute der ersten Gruppe, die durch den Server zurückgegeben wird.

4. Verfahren nach einem der Ansprüche 1 bis 3, ferner umfassend:
Melden, durch den ersten Verteilungsroboter, der Positionsinformationen des ersten Verteilungsroboters über einen Nachrichtenkanal der ersten Gruppe gemäß einer voreingestellten Zeitspanne.

5. Verfahren nach einem der Ansprüche 1 bis 4, wobei, wenn der erste Verteilungsroboter das Fahren während des Fahrens einstellt, der erste Verteilungsroboter eine Fahren-einstellen-Nachricht über einen Nachrichtenkanal der ersten Gruppe meldet, sodass jeder dritte Verteilungsroboter, der nach dem ersten Verteilungsroboter abfährt, einen Fahrzustand steuert und der vorgegebene Sicherheitsabstand zwischen zwei benachbarten Verteilungsrobotern beibehalten wird; und
jeder Verteilungsroboter, der vor dem ersten Verteilungsroboter abfährt, normal fährt.

6. Verfahren nach Anspruch 5, wobei das Verfahren, nach dem Melden der Fahren-einstellen-Nachricht durch den ersten Verteilungsroboter über einen Nachrichtenkanal der ersten Gruppe, ferner umfasst:
Empfangen, durch den ersten Verteilungsroboter, von Identifikationsinformationen einer zweiten Gruppe, die durch den Server erzeugt werden, wobei die zweite Gruppe den ersten Verteilungsroboter und jeden dritten Verteilungsroboter umfasst; wobei die Identifikationsinformationen der zweiten Gruppe Identifikationsinformationen eines Nachrichtenkanals der zweiten Gruppe sind, die durch den Server erzeugt werden.

7. Verfahren nach Anspruch 6, wobei, wenn bestimmt wird, dass das Fahren fortgesetzt wird, der erste Verteilungsroboter zu fahren beginnt und Fahrinformationen über den Nachrichtenkanal der zweiten Gruppe meldet, sodass jeder dritte Verteilungsroboter der Reihe nach zu fahren beginnt.

8. Verfahren nach einem der Ansprüche 1 bis 5, wobei der erste Verteilungsroboter das Stoppen gemäß einem voreingestellten Stoppbereich eines Zielverteilungspunkts und Positionsinformationen anderer Verteilungsroboter abschließt (2031), wenn der erste Verteilungsroboter bestimmt, dass er den Zielverteilungspunkt erreicht hat; und
der erste Verteilungsroboter eine Stoppen-abgeschlossen-Nachricht über den Nachrichtenkanal der ersten Gruppe meldet (2032).

9. Verfahren nach einem der Ansprüche 1 bis 5, wobei, nachdem jeder Verteilungsroboter in der ersten Gruppe eine Verteilungsaufgabe abgeschlossen hat, der erste Verteilungsroboter sich selbst steuert, um gemäß einer Reihenfolge jedes Verteilungsroboters in der ersten Gruppe zu dem Abfahrtspunkt zurückzukehren, und sicherstellt, dass der Abstand zu dem zweiten Verteilungsroboter nicht kleiner als der voreingestellte Sicherheitsabstand ist.

10. Verfahren nach Anspruch 9, wobei, wenn der erste Verteilungsroboter an dem Abfahrtspunkt ankommt, der erste Verteilungsroboter eine Nachricht darüber, dass er zurückgekehrt ist, über den Nachrichtenkanal der ersten Gruppe meldet, sodass der Server die erste Gruppe auflöst, wenn alle Verteilungsroboter der ersten Gruppe zu dem Abfahrtspunkt zurückkehren.

11. Vorrichtung (30) zum Steuern eines Verteilungsroboters, umfassend:
ein Erfassungsmodul (31), das so konfiguriert ist, dass es für einen ersten Verteilungsroboter in einer ersten Gruppe dessen eigenen Positionsinformationen und Positionsinformationen eines zweiten Verteilungsroboters erfasst, wobei die erste Gruppe eine Gruppe ist, zu der mehrere Verteilungsroboter hinzugefügt werden, und die erste Gruppe zum Nachrichtenaustausch unter den mehreren Verteilungsrobotern innerhalb der ersten Gruppe verwendet wird; wobei die mehreren Verteilungsroboter den ersten Verteilungsroboter und den zweiten Verteilungsroboter umfassen, und der zweite Verteilungsroboter ein sich am nächsten zu dem ersten Verteilungsroboter befindender Verteilungsroboter ist, der von einem Abfahrtspunkt abfährt, bevor der erste Verteilungsroboter von dem Abfahrtspunkt abfährt; und
ein Steuermodul (32), das so konfiguriert ist, dass es für den ersten Verteilungsroboter dessen eigenen Fahrzustand gemäß dessen eigenen Positionsinformationen, den Positionsinformationen des zweiten Verteilungsroboters und einer voreingestellten Fahrroute so steuert, dass der erste Verteilungsroboter in einem Fall, dass ein Abstand zu dem zweiten Verteilungsroboter nicht kleiner als ein voreingestellter Sicherheitsabstand ist, mit einer schnellsten Geschwindigkeit fährt.

12. Computervorrichtung (50), umfassend: mindestens einen Prozessor (51) und einen Speicher (52); wobei
der Speicher (52) ein Computerprogramm speichert; wobei der mindestens eine Prozessor (51) das in dem Speicher (52) gespeicherte Computerprogramm ausführt, um das Verfahren nach einem der Ansprüche 1 bis 10 zu implementieren.

13. System zum Steuern eines Verteilungsroboters, umfassend: einen Server und mindestens zwei Verteilungsroboter; wobei
der Server zum Erstellen einer Gruppe und eines Nachrichtenkanals der Gruppe konfiguriert ist;
ein erster Verteilungsroboter, der in der Gruppe nicht zuerst abfährt, konfiguriert ist, das Verfahren nach einem der Ansprüche 1 bis 10 auszuführen;
ein Verteilungsroboter, der in der Gruppe zuerst abfährt, konfiguriert ist, eine Abfahrtsanforderung an den Server zu senden, wobei die Abfahrtsanforderung einen Abfahrtspunkt und einen Zielverteilungspunkt umfasst; und
der Server ferner konfiguriert ist, eine Fahrroute gemäß der Abfahrtsanforderung zu bestimmen und die Abfahrtsanforderung an den Verteilungsroboter zurückzugeben, der zuerst abfährt.

14. Computerlesbares Speichermedium, **dadurch gekennzeichnet, dass** das computerlesbare Speichermedium ein Computerprogramm speichert und das Computerprogramm, bei Ausführung, das Verfahren nach einem der Ansprüche 1 bis 10 implementiert.

15. Computerprogramm, **dadurch gekennzeichnet, dass** es Programmcodes umfasst, wobei, wenn ein Computer das Computerprogramm ausführt, die Programmcodes das Verfahren nach einem der Ansprüche 1 bis 10 ausführen.

## Revendications

1. Procédé de commande d'un robot de distribution, comprenant :
l'acquisition (101), par un premier robot de distribution dans un premier groupe, de ses propres informations de position et d'informations de position d'un deuxième robot de distribution, dans lequel le premier groupe est un groupe dans lequel de multiples robots de distribution sont ajoutés et le premier groupe est utilisé pour le partage de messages entre les multiples robots de distribution au sein du premier groupe ; dans lequel les multiples les robots de distribution comprennent le premier robot de distribution et le deuxième robot de distribution, et le deuxième robot de distribution est un robot de distribution le plus proche du premier robot de distribution qui part d'un point de départ avant que le premier robot de distribution ne parte du point de départ ; et
la commande (102), par le premier robot de distribution, de son propre état de conduite selon ses propres informations de position, les informations de position du deuxième robot de distribution, et un itinéraire de conduite prédéfini, de sorte que le premier robot de distribution conduit à une vitesse la plus rapide dans un cas où une distance jusqu'au deuxième robot de distribution n'est pas inférieure à une distance de sécurité prédéfinie.

2. Procédé selon la revendication 1, comprenant en outre :
la détermination (2011), par le premier robot de distribution, d'une distance de conduite du deuxième robot de distribution selon les informations de position du deuxième robot de distribution après que le départ du deuxième robot de distribution ; et
le départ (2012), par le premier robot de distribution, lorsque la distance de conduite du deuxième robot de distribution atteint la distance de sécurité prédéfinie.

3. Procédé selon la revendication 1 ou 2, dans lequel, avant le départ des robots de distribution du premier groupe, le procédé comprend en outre :
avant l'ajout du premier robot de distribution au premier groupe, l'envoi (2021), par le premier robot de distribution, d'une demande de rattachement à un groupe à un serveur, dans lequel la demande de rattachement à un groupe comprend des informations d'identification du premier groupe ; dans lequel les informations d'identification du premier groupe sont des informations d'identification d'un canal de message du premier groupe créé par le serveur ; et
la réception (2022), par le premier robot de distribution, de l'itinéraire de conduite prédéfini du premier groupe renvoyé par le serveur.

4. Procédé selon l'une quelconque des revendications 1 à 3, comprenant en outre :
le signalement, par le premier robot de distribution, des informations de position du premier robot de distribution par l'intermédiaire d'un canal de message du premier groupe selon une période prédéfinie.

5. Procédé selon l'une quelconque des revendications 1 à 4, dans lequel si le premier robot de distribution arrête de conduire pendant la conduite, le premier robot de distribution signale un message d'arrêt de conduite par l'intermédiaire d'un canal de message du premier groupe, de sorte que chaque troisième robot de distribution partant après le premier robot de distribution commande un état de conduite et la distance de sécurité prédéfinie entre deux robots de distribution adjacents est maintenue ; et
chaque robot de distribution partant avant le premier robot de distribution conduit normalement.

6. Procédé selon la revendication 5, dans lequel, après que le signalement par le premier robot de distribution du message d'arrêt de conduite par l'intermédiaire d'un canal de message du premier groupe, le procédé comprend en outre :
la réception, par le premier robot de distribution, d'informations d'identification d'un deuxième groupe créé par le serveur, dans lequel le deuxième groupe comprend le premier robot de distribution et chaque troisième robot de distribution ; dans lequel les informations d'identification du deuxième groupe sont des informations d'identification d'un canal de message du deuxième groupe créé par le serveur.

7. Procédé selon la revendication 6, dans lequel, lorsqu'il est déterminé que la conduite est poursuivie, le premier robot de distribution commence à conduire, et signale des informations de conduite par l'intermédiaire du canal de message du deuxième groupe, de sorte que chaque troisième robot de distribution commence à conduire séquentiellement.

8. Procédé selon l'une quelconque des revendications 1 à 5, dans lequel le premier robot de distribution accomplit (2031) l'arrêt selon une zone d'arrêt prédéfinie d'un point de distribution cible et des informations de position d'autres robots de distribution lorsque le premier robot de distribution détermine qu'il a atteint le point de distribution cible ; et
le premier robot de distribution signale (2032) un message d'accomplissement d'arrêt par l'intermédiaire du canal de message du premier groupe.

9. Procédé selon l'une quelconque des revendications 1 à 5, dans lequel, après l'accomplissement par chaque robot de distribution dans le premier groupe d'une tâche de distribution, le premier robot de distribution se commande lui-même pour revenir au point de départ selon un ordre de chaque robot de distribution dans le premier groupe, et maintient le fait que la distance jusqu'au deuxième robot de distribution n'est pas inférieure à la distance de sécurité prédéfinie.

10. Procédé selon la revendication 9, dans lequel lorsque le premier robot de distribution arrive au point de départ, le premier robot de distribution signale un message qu'il a renvoyé par l'intermédiaire du canal de message du premier groupe, de sorte que le serveur défait le premier groupe lorsque tous les robots de distribution du premier groupe reviennent au point de départ.

11. Appareil (30) de commande d'un robot de distribution, comprenant :
un module d'acquisition (31), configuré pour permettre à un premier robot de distribution dans un premier groupe d'acquérir ses propres informations de position et des informations de position d'un deuxième robot de distribution, dans lequel le premier groupe est un groupe dans lequel de multiples robots de distribution sont ajoutés et le premier groupe est utilisé pour le partage de messages entre les multiples robots de distribution au sein du premier groupe ; dans lequel les multiples robots de distribution comprennent le premier robot de distribution et le deuxième robot de distribution, et le deuxième robot de distribution est un robot de distribution le plus proche du premier robot de distribution qui part d'un point de départ avant que le premier robot de distribution ne parte du point de départ ; et
un module de commande (32), configuré pour permettre au premier robot de distribution de commander son propre état de conduite selon ses propres informations de position, les informations de position du deuxième robot de distribution, et un itinéraire de conduite prédéfini, de sorte que le premier robot de distribution conduit à une vitesse la plus rapide dans un cas où une distance jusqu'au deuxième robot de distribution n'est pas inférieure à une distance de sécurité prédéfinie.

12. Dispositif informatique (50), comprenant : au moins un processeur (51) et une mémoire (52) ; dans lequel
la mémoire (52) stocke un programme d'ordinateur ; l'au moins un processeur (51) exécute le programme d'ordinateur stocké dans la mémoire (52) pour mettre en œuvre le procédé selon l'une quelconque des revendications 1 à 10.

13. Système de commande d'un robot de distribution, comprenant : un serveur et au moins deux robots de distribution ; dans lequel
le serveur est configuré pour créer un groupe et un canal de message du groupe ;
un premier robot de distribution qui ne part pas en premier dans le groupe est configuré pour exécuter le procédé selon l'une quelconque des revendications 1 à 10 ;
un robot de distribution qui part en premier dans le groupe est configuré pour envoyer une demande de départ au serveur, dans lequel la demande de départ comprend un point de départ et un point de distribution cible ; et
le serveur est en outre configuré pour déterminer un itinéraire de conduite selon la demande de départ, et renvoyer la demande de départ au robot de distribution qui part en premier.

14. Support de stockage lisible par ordinateur, **caractérisé en ce que** le support de stockage lisible par ordinateur stocke un programme d'ordinateur, et le programme d'ordinateur, lorsqu'il est exécuté, met en œuvre le procédé de l'une quelconque des revendications 1 à 10.

15. Programme d'ordinateur, **caractérisé en ce qu'**il comprend des codes de programme, lorsqu'un ordinateur exécute le programme d'ordinateur, les codes de programme exécutent le procédé selon l'une quelconque des revendications 1 à 10.
